# EUROPEAN PATENT APPLICATION

(11) **EP 4 840 371 A1**
(43) Date of publication of application: **18.11.2026**
(21) Application number: 26178378.1
(22) Date of filing: 12.05.2026
(51) Int. Cl.: A47J 31/44, A47J 31/36

(54) **GROUNDS CONTAINER**

(30) Priority: 13.05.2025 PL 45202725
(71) Applicant: BSH Hausgeräte GmbH, 81739 München (DE)
(72) Inventor: Monnheimer, Maximilian, 69483 Wald-Michelbach (DE); Mlotek, Patrik, 83374 Traunwalchen (DE)

(57) **Abstract**

A grounds container (1) of a coffee machine (2) and an automatic coffee machine comprising a brewing chamber (3), a brewing unit (4), a brewing unit drive (5), a scraping edge (6) and a drip tray (7) on which the grounds container (1) is placed, wherein the grounds container (1) has an additional area (8) for collecting grounds.

## Description

The subject of the present invention is a grounds container for a coffee machine comprising a brewing chamber, a brewing unit, a brewing unit drive, a scraping edge and a drip tray on which the grounds container is placed. The present invention relates to an automatic coffee machine comprising a grounds container.

Coffee machines are known from the prior art. Thanks to advanced technologies such as automatic coffee grinding, precise temperature control and adapting brewing parameters to individual preferences, users can enjoy modern functions in daily use of the device. In addition to advanced technologies, a well-thought-out, ergonomic design of the machine's components, e.g. the drip tray assembly, also contributes to increased user satisfaction. Solutions concerning the drip tray and the grounds container placed on it are known. Coffee preparation consists in subjecting ground coffee to a brewing process in the brewing chamber. After completion of this process, a puck of spent coffee grounds is ejected from the brewing unit, and water is collected in the drip tray. The grounds must be collected appropriately so that they do not mix with the water contained in the drip tray. Separating the grounds from the water limits the possibility of mold growth and also makes removal easier. Ensuring their separation contributes not only to better hygiene but also affects beverage quality. For that purpose, the machine is equipped with a drip tray on which the grounds container is placed. Drip trays have many improvements such as water level sensors, filtering elements or automatic water drainage mechanisms. Grounds containers are also modified so that emptying them is easy and hygienic. Many modern coffee machine models are equipped with systems allowing quick access to the grounds container, which makes the emptying process simple and comfortable. To reduce the frequency of emptying the grounds container, manufacturers introduce solutions such as larger tank capacities or grounds compaction systems that allow densification. This allows the user to use the machine for longer without having to empty and clean the grounds container, saving time and increasing comfort. The modern approach to the design of drip trays and grounds containers significantly raises the standard of use of coffee machines.

The patent document CN 103892709 A discloses a detecting structure for a grounds container used in coffee machines. The detecting structure for the grounds container comprises a grounds container, detecting devices for monitoring the filling level of the grounds container and a control circuit of the coffee machine. The detecting devices are located at the opening of the grounds container and are electrically connected to the control circuit. The detecting devices include at least one set of light-detecting elements. This technical solution has several advantages: it effectively monitors conditions inside the grounds container, ensuring proper operation of the coffee machine. Moreover, the construction is simple, versatile and compatible with various coffee machines.

The patent document EP 3771369 A1 a coffee machine drip tray containing a grounds container composed of a bottom wall and side walls and a grounds-collecting shelf which is positioned essentially entirely inside the grounds container and whose height is adjustable. The present invention concerns a drip tray with a grounds container equipped with a movable shelf that preserves the shape of the compacted grounds, greatly facilitating cleaning of the grounds container.

A significant drawback of grounds containers known from the prior art is their limited capacity and the presence of dead zones that remain unused, which necessitates frequent emptying. The capacity of the container is limited because, due to its function, the grounds container must be located on the drip tray, in front of the brewing unit.

The object of the present invention is to develop a grounds container that overcomes the drawbacks of containers known from the prior art, in particular a container capable of increasing its volume when the drip tray with the grounds container is pulled out of the coffee machine for emptying and cleaning.

The present invention introduces a grounds container for collecting the grounds remaining after the coffee brewing process in a coffee machine that has: a brewing chamber, a brewing unit, a brewing unit drive, a scraping edge and a drip tray on which the grounds container is placed, characterized in that the grounds container has an additional area for collecting grounds which is formed while the container is pulled out together with the drip tray from the machine for emptying. The grounds container is placed in the housing of the coffee machine. The grounds container is a separate element located on the drip tray. The drip tray operates as a drawer which, together with the grounds container mounted on it, can be pulled out of the appliance housing for emptying. The drip tray is located under the brewing unit and the brewing unit drive, and the grounds container is located on the drip tray in front of the brewing unit and the brewing unit drive so that the user can pull it out of the coffee machine housing. The grounds container has an additional area into which excess grounds accumulated in the grounds container are swept by the scraping edge during pulling out of the drip tray with the grounds container from the coffee machine.

Preferably, the grounds container has a first area into which excess grounds accumulated first and an second area as the additional area. More preferably, said first area is a main collecting area and/or the second area serves as an extension.

Preferably, the grounds container includes a movable shelf which, when unfolded, forms the additional area. The additional area is created by unfolding the movable shelf, which is movably attached to the grounds container. The grounds container has a rear wall, a front wall, two side walls and a bottom. The rear wall is the wall located on the side of the brewing unit. The grounds container includes an additional element in the form of a shelf which is movably mounted on the rear wall of the grounds container. The shelf has a spring which assists the unfolding of the shelf that forms the additional grounds-collecting area. The shelf unfolds during pulling out of the drip tray with the grounds container from the coffee machine. Grounds are swept by the scraping edge during pulling out of the drip tray with the grounds container from the coffee machine. The shelf may also unfold by gravity alone, without a spring, when the shelf deploys under its own weight. The shelf may also have a locking catch with the possibility of manual release. The additional area for collecting grounds is important when the user removes the drip tray together with the grounds container in which the height of the collected grounds exceeds the height of the container. During coffee preparation this additional spatial element in the form of the folding shelf is not used. It can therefore be optimized, making the construction more compact and ergonomically adapted as needed. While the drip tray is being pulled out from the coffee machine, if the grounds container is filled with brewing residues forming a pile whose height exceeds the height of the grounds container, the scraping edge located in the housing of the coffee machine sweeps the excess amount of grounds onto the additional folding shelf, which unfolds progressively while the drip tray is being pulled out, so that the grounds do not fall outside the grounds container. The purpose of this solution is to provide convenient handling while extending the time between successive emptying operations of the grounds container.

Preferably the grounds container consists of a fixed part and a pull-out part, and the additional area is formed between the fixed part and the pull-out part when the parts are in an extended position, i.e. the pull-out part is pulled out from the fixed part. The pull-out part may be designed in the form of a roll-up element. Pulling out the pull-out part may be realized by using magnetic force of two magnets with appropriate fields mounted in the grounds container or of a magnet in the grounds container and a magnet mounted permanently in the housing of the coffee machine. When the drip tray with the grounds container is pulled out from the coffee machine, the container expands, creating an additional area for collecting grounds which, during removal of the drip tray with the grounds container, are swept by the scraping edge into the additional area that forms when the grounds container expands. Thanks to this solution the frequency of emptying the grounds container can be significantly reduced.

Preferably the grounds container has a movable ramp controlled by a processor. The processor controls the position of the ramp based on analysis of data, e.g. from sensors, and is responsible for correct positioning of the ramp, which depends on the degree of filling of the grounds container with residues produced in the coffee brewing process. The ramp is a flat element in the form of a shelf. The ramp can be in two positions: a home position and a working position. The ramp in the home position is horizontal, located between the brewing unit and the brewing unit drive. The working position of the ramp is the position in which the ramp is extended out from the space between the brewing unit and the brewing unit drive and drops toward the grounds container, directing grounds from the brewing unit to the front part of the grounds container. The front part of the grounds container is the part on the side of the opening in the housing of the coffee machine used for removing the drip tray. The ramp is driven by a mechanism controlled by a processor with appropriate software or by an artificial intelligence module that acts as an intelligent controller adapting brewing parameters, monitoring device condition, learning the user's preferences and optimizing processes including the ramp deployment process, thereby providing better beverage quality and easier operation. The processor records the beverage type and individual settings and then, based on these parameters, calculates the amount of grounds. Simultaneously the processor records the fill state of the grounds container. The ramp is deployed from the home position when the part of the grounds container toward the brewing unit is filled and the part of the grounds container toward the front opening for removing the drip tray is empty and unused. The front part of the container is empty due to the small ejection force of grounds from the brewing unit. To fill this empty front part, the ramp extends and directs grounds directly into this empty portion. The ramp is extended when the number of prepared beverages reaches a predetermined value or based on data from a sensor measuring the fill level of the grounds container. Thanks to the movable ramp the volume of the grounds container is filled more optimally, thereby significantly reducing the frequency of emptying the container.

The subject of the invention, in exemplary embodiments, is illustrated in the drawing, in which:
- Fig. 1: shows a coffee machine with a grounds container
- Fig. 2: shows a coffee machine with a grounds container having an additional grounds-collecting area in the form of a folding shelf
- Fig. 3: shows a grounds container composed of a fixed part and a pull-out part
- Fig. 4: shows a coffee machine with a grounds container and the ramp in the rest position
- Fig. 5: shows a coffee machine with a grounds container and the ramp in the working position

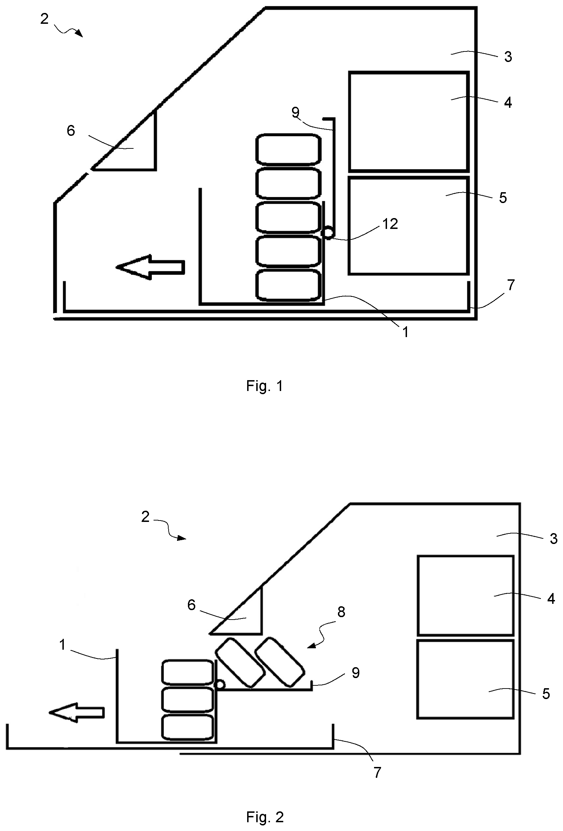

Fig. 1 shows a coffee machine 2 that has a brewing chamber 3, which contains a brewing unit 4, a brewing unit drive 5, and a drip tray 7 in the form of a drawer together with the grounds container 1. The coffee machine 2 has a scraping edge 6 that serves to scrape off excess grounds collected in the grounds container 1. The scraping edge 6, during withdrawal of the drip tray 7 together with the grounds container 1 from the coffee machine 2, scrapes off grounds that are located above the upper edge of the grounds container 1. The arrow indicates the direction of pulling the drip tray 7 with the grounds container 1 out of the coffee machine 2. To prevent the scraped grounds from getting into the drip tray 7, the grounds container 1 has a fold-out shelf 9 movably attached to the grounds container 1 by a spring 12, which assists the deployment of shelf 9 during the withdrawal of the drip tray 7 with the grounds container 1 from the coffee machine 2.

The brewing chamber 3 houses all components necessary for preparing coffee. The brewing unit 4 is the location where pre-ground coffee in the appropriate amount is percolated with water at the appropriate temperature and under the appropriate pressure. The water temperature and pressure are selected depending on the type and intensity of the coffee. Hot water at high pressure passes through the ground coffee and is then delivered to the cup via the spout. The ground coffee remaining after the brewing process is spent grounds, which are waste transferred to the grounds container 1. To carry out the brewing process, the brewing unit 4 has a brewing unit drive 5.

Fig. 2 shows a coffee machine 2 with a grounds container 1 having an additional area 8 for collecting grounds in the form of a folding shelf 9. The grounds container 1 is placed at a designated location on the drip tray 7, which is located in the lower part of the coffee machine 2 and is used to collect water remaining after the coffee-brewing process. Due to the limited capacity of the brewing chamber 3, the dimensions and capacity of the grounds container 1 are also limited. To increase capacity, the grounds container 1 has a fold-out shelf 9 which, when unfolded, forms an additional area 8 in which grounds are collected. The additional area 8 is formed during the extraction of the drip tray 7 with the grounds container 1 from the coffee machine 2. During this process the shelf 9 automatically unfolds thanks to the force of the spring 12 or due to gravity, and grounds whose height exceeds the upper edge of the grounds container 1 are scraped off by the scraping edge 6, which is located on the inner part of the housing of the coffee machine 2, above the upper edge of the opening used for removing the drip tray 7.

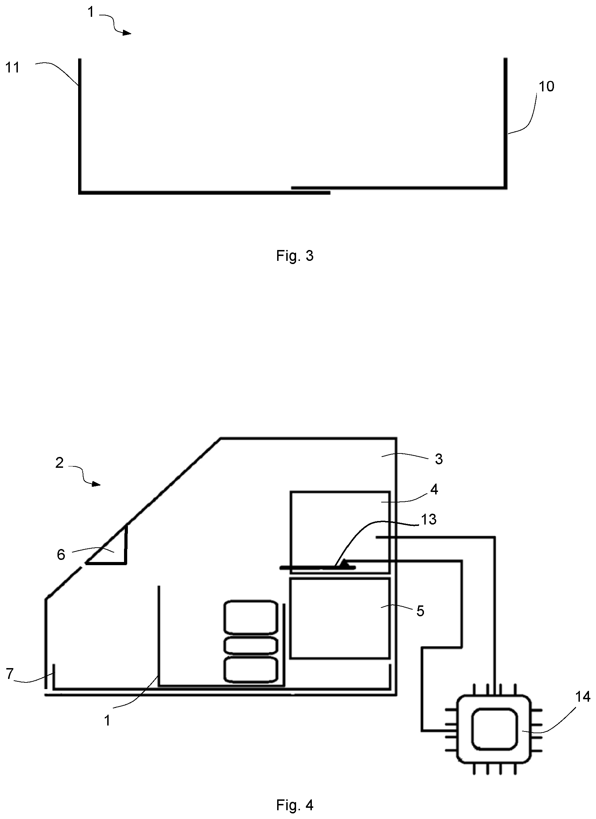

Fig. 3 shows a grounds container 1 composed of a fixed part 10 and a pull-out part 11. The grounds container 1 may also be designed as two sliding elements. The grounds container 1 consists of the fixed part 10 and a pull-out part 11 which, when slid apart, create the additional area 8 for collecting an excess amount of grounds. The connection of the pull-out part 11 to the fixed part 10 is implemented as rails.

Fig. 4 shows a coffee machine 2 with a grounds container 1 and the ramp 13 in the initial rest position. The coffee machine 2 has the ramp 13. The ramp 13 is a flat element in the form of a shelf 9 whose position is controlled by a processor 14. The ramp 13 has two positions: a rest position and a working position. The rest position of the ramp 13 is horizontal and is located between the brewing unit 4 and the brewing unit drive 5.

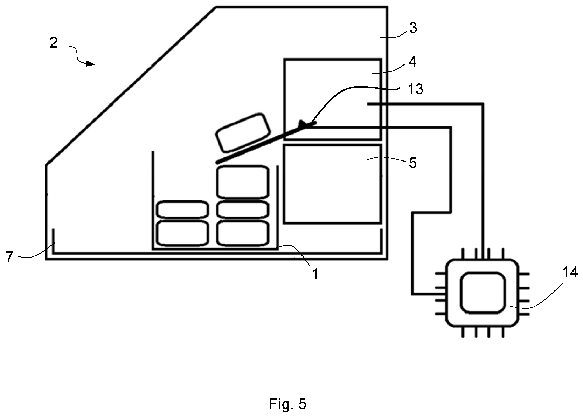

Fig. 5 shows a coffee machine 2 with a grounds container 1 and the ramp 13 in the working position. The working position of the ramp 13 is one in which one end of the ramp 13 tilts down toward the grounds container 1, redirecting grounds from the brewing unit 4 into the grounds container 1. The ramp 13 moves from the rest position to the working position when the rear area of the grounds container 1, located on the side of the brewing unit 4, is filled with grounds while the front area, located on the front side of the coffee machine 2, is empty. The uneven filling of the grounds container 1 is caused by the small ejection force of grounds from the brewing unit 4. Initially, grounds accumulate in the rear part of the grounds container 1, and the front part becomes filled only to a small extent. To fill the entire container evenly, after the rear area of the grounds container 1 is filled, the ramp 13 redirects grounds to the front part of the grounds container 1, filling it. The processor 14 controls the position of the ramp 13 based on data from sensors placed in the coffee machine 2 or based on a predetermined number of coffee beverages to be prepared. The processor 14 includes an artificial intelligence module that learns the behavior of a given user and adapts the process so that the comfort of using the device is maximized.

### List of reference signs

- 1: grounds container
- 2: coffee machine
- 3: brewing chamber
- 4: brewing unit
- 5: brewing unit drive
- 6: scraping edge
- 7: drip tray
- 8: additional area
- 9: shelf
- 10: fixed part
- 11: pull-out part
- 12: spring
- 13: ramp
- 14: processor

## Claims

1. A grounds container (1) of a coffee machine (2), wherein the coffee machine (2) comprises: a brewing chamber (3), a brewing unit (4), a brewing unit drive (5), a scraping edge (6) and a drip tray (7) on which the grounds container (1) is placed, **characterized in that** the grounds container (1) has an additional area (8) for collecting grounds.

2. The grounds container (1) according to claim 1, **characterized in that** the grounds container (1) has a movable shelf (9) which, when unfolded, creates the additional area (8).

3. The grounds container (1) according to claim 1 or 2, **characterized in that** the shelf (9) has a spring (12).

4. The grounds container (1) according to claim 1, **characterized in that** the grounds container (1) consists of a fixed part (10) and a pull-out part (11), and the additional area (8) is located between the fixed part (10) and the pull-out part (11) when the parts are in the extended position.

5. The grounds container (1) according to any of preceding claims, **characterized in that** the grounds container (1) has a movable ramp (13) controlled by a processor (14).

6. Automatic coffee machine comprising a brewing chamber (3), a brewing unit (4), a brewing unit drive (5), a scraping edge (6) and a drip tray (7) on which the grounds container (1) is placed **characterized in that** the grounds container (1) has an additional area (8) for collecting grounds.
